# EUROPÄISCHE PATENTSCHRIFT

(11) **EP 2 849 014 B1**
(45) Veröffentlichungstag und Bekanntmachung des Hinweises auf die Patenterteilung: **15.02.2023**
(21) Anmeldenummer: 14179707.6
(22) Anmeldetag: 04.08.2014
(51) Int. Cl.: G05B 19/4061, G05B 19/4069

(54) **Verfahren zur Steuerung einer Verzahnmaschine sowie Verzahnmaschine**
Method for controlling a gear cutting machine and gear cutting machine
Procédé de commande d'une machine à tailler les engrenages et machine à tailler les engrenages

(30) Priorität: 13.09.2013 DE 102013015234
(43) Veröffentlichungstag der Anmeldung: 18.03.2015
(73) Patentinhaber: Liebherr-Verzahntechnik GmbH, 87437 Kempten (DE)
(72) Erfinder: Schuon, Dipl.-Ing. (FH) Florian, 87474 Buchenberg (DE)
(74) Vertreter: Laufhütte, Dieter

(56) Entgegenhaltungen:
- WO-A1-2008/025577
- JP-A- 2001 222 304
- US-A1- 2008 018 287
- US-A1- 2011 295 576
- OKUMA: "Collision Avoidance: 5 Keys that Make It or Break It (Video)", , 14 August 2013 (2013-08-14), OKUMA - Knowledge Center - Blog Posts Retrieved from the Internet: URL:https://www.okuma.com/collision-avoida nce-5-keys-that-make-or-break-it [retrieved on 2019-06-03]
- MORIWAKI ET AL: "Multi-functional machine tool", CIRP ANNALS, ELSEVIER BV, NL, CH, FR, vol. 57, no. 2, 1 January 2008 (2008-01-01), pages 736-749, XP025675462, ISSN: 0007-8506, DOI: 10.1016/J.CIRP.2008.09.004 [retrieved on 2008-10-28]

## Beschreibung

Die Erfindung betrifft ein Verfahren zur Steuerung einer Verzahnmaschine mit wenigstens einem Werkzeug zur Verzahnung eines in einer Werkstückaufnahme eingespannten Werkstückes.

Bekannte Verzahnmaschinen umfassen für die Verzahnbearbeitung von Werkstücken mehrere gesteuerte CNC-Achsen, um die notwendige Radial-, Tangential-, Axial-, Dreh-, Schwenk- oder Vertikalbewegungen des Werkzeugs, Werkstückes oder anderweitiger Maschinenkomponenten zu erzeugen. Die CNC-Steuerung der Verzahnmaschine übernimmt die programmgesteuerte Ansteuerung der jeweiligen CNC-Achsantriebe.

Moderne Verzahnmaschinen werden zunehmend universell ausgeführt, sodass diese durch rüstbare Maschinenkomponenten für unterschiedliche Verzahnanwendungen gerüstet und programmiert werden können. Rüstbare Maschinenkomponenten umfassen beispielsweise den Bearbeitungskopf bzw. einen darin eingespannten Arbeitsdorn, auf den ein oder mehrere Werkzeuge aufgedornt sind, sowie Vorrichtungen zum Aufspannen des Werkstückes oder das Werkstück selbst. Die Vielfalt und Komplexität der verwendeten rüstbaren Maschinenkomponenten erschwert die Programmierung der Maschinensteuerung. Zudem sind für den programmgesteuerten Verzahnprozess eine Reihe von Maschinenparametern, die die einzelnen rüstbaren Maschinenkomponenten betreffen, für die Maschinenkonfiguration notwendig. Diese müssen in der Regel vom Bediener von Hand in die Steuerung eingegeben werden.

Aus der vorstehenden Problematik ergibt sich ein erhöhtes Betriebsrisiko der Verzahnmaschine, da aufgrund von Fehleingaben bzw. fehlerbehafteten Programmcodes Kollisionen während des Verzahnprozesses auftreten können. Aus diesem Grund sind umfassende Schutzmaßnahmen wünschenswert, die das Kollisionsrisiko zu verhindern wissen.

Aus der US 2008/018287 A1 ist eine Werkzeugmaschine mit einer Kollisionsüberwachung bekannt, wobei manuelle Steuerbefehle des Bedieners auf mögliche Kollisionsgefahren innerhalb der Maschine geprüft werden und gegebenenfalls die gewünschte Bewegungsgeschwindigkeit des Werkzeuges reduziert bzw. gestoppt wird.

Zudem thematisiert der Artikel aus der Nichtpatentliteratur mit der NPL-Nummer XP025675462 (MORIWAKI ET AL: "Multi-functional machine tool", 01 Januar 2008, Seiten 736-749) ein Okuma-Bearbeitungszentrum, das in der Lage ist, geometrische Änderungen eines zu erzeugenden Werkstücks zu überwachen. Dazu ist ein Echtzeit-Simulator vorgesehen, der geometrische Änderungen eines Werkstücks während der Bearbeitung überwacht und zeitgleich mit der tatsächlichen Bearbeitung ausgeführt wird. Da die Simulation der tatsächlichen Bearbeitung etwas vorausläuft, ist es möglich, die Bearbeitungsmaschine unter Einbeziehung der Simulation automatisch unmittelbar vor einer Kollision zu stoppen.

Diese Aufgabe wird durch ein Verfahren gemäß den Merkmalen des Anspruchs 1 gelöst. Vorteilhafte Ausgestaltungen des Verfahrens sind Gegenstand der sich an den Hauptanspruch anschließenden abhängigen Unteransprüche.

Gemäß Anspruch 1 wird ein Verfahren zur Steuerung einer Verzahnmaschine mit wenigstens einem Werkzeug zur Verzahnung eines in einer Werkstückaufnahme eingespannten Werkstückes vorgeschlagen. Die Verzahnmaschine ist zur Herstellung von verzahnten Zahnrädern mit Innen- oder Außenverzahnung geeignet. Erfindungsgemäß führt die Maschinensteuerung während der Verzahnbearbeitung eine dreidimensionale Kollisionsüberwachung aus. Die Kollisionsüberwachung erfolgt somit in Echtzeit während der Verzahnbearbeitung. Idealerweise wird jeder Bearbeitungsschritt des Verzahnprozesses auf eine potentielle Kollision hin überwacht.

Erfindungsgemäß ist die Kollisionsüberwachung gemäß Anspruch 1, dadurch gekennzeichnet, dass während eines CNC gesteuerten Verzahnprozesses und eines Werkstückwechsels bzw. einen Werkzeugwechsels aktiviert, da auch von diesen speziellen Bearbeitungsvorgängen eine erhebliche Kollisionsgefahr bei einer bestimmten Maschinenkonstellation droht.

Erfindungsgemäß arbeitet die Kollisionsüberwachung vorausschauend, indem die zukünftige Kinematik der Maschinenkomponenten während des Programmablaufes auf Kollision überwacht wird, wobei zukünftige Bewegungsparameter aus dem Programmcode der Maschinensteuerung abgeleitet werden. Bei einer nicht-erfindungsgemäßen manuellen Maschinenbedienung der Verzahnmaschine werden durch geeignete Prognoseverfahren zukünftige Bewegungsparameter ein oder mehrerer Maschinenkomponenten geschätzt.

Die Kinematik bestimmter Maschinenkomponenten wird während des Verzahnprozesses in einem dreidimensionalen Raum überwacht. Einzelne Maschinenkomponenten werden durch dreidimensionale Objekte virtuell in der Maschinensteuerung simuliert und deren Bewegungsablauf in Echtzeit auf Kollision hin überwacht. Der gesamte Verzahnprozess wird folglich in einem dreidimensionalen Raummodell simuliert und auf Kollisionen bzw. mögliche Kollisionen überwacht. Zudem muss eine Entscheidungslogik zwischen erlaubten Kollisionen, beispielsweise zwischen Werkzeug, insbesondere Werkzeugschneide, und Werkstück, und nicht-erlaubten Kollisionen unterscheiden.

Idealerweise werden nahezu alle Maschinenkomponenten, die prozessabhängigen Bewegungen während des Verzahnvorgangs unterliegen, auf Kollision hin überwacht. Bei den Bewegungen handelt es sich um Zustellbewegungen, Rotationsbewegungen oder Schwenkbewegungen. Die Kollisionsüberwachung ist nicht mehr auf eine reine Überwachung der Werkzeugschneide begrenzt, sondern alle beweglichen Maschinenkomponenten werden über ihren Gesamtumfang bzw. nahezu gesamten Umfang von der Kollisionsüberwachung erfasst.

In einer Ausführungsform, die nicht Teil der Erfindung ist, umfasst die Kollisionsüberwachung rüstbare Maschinenkomponenten, die je nach auszuführendem Verzahnungsverfahren in der Verzahnmaschine installiert werden. Rüstbare Maschinenkomponenten sind insbesondere der Bearbeitungskopf, ein darin eingespannter Arbeitsdorn mit ein oder mehreren aufgedornten Werkzeugen, eine Vorrichtung zum Aufspannen eines Werkstückes sowie das Werkstück selbst. Bei rüstbaren Maschinenkomponenten besteht ein erhöhtes Kollisionsrisiko, da deren Verwendung manuelle Konfigurationseingaben bzw. Modifikationen der Maschinensteuerung erforderlich macht. Aus diesem Grund ist eine gezielte Kollisionsüberwachung dieser rüstbaren Teile besonders bevorzugt.

Gemäß einer bevorzugten Ausgestaltung des Verfahrens werden die zu überwachenden Maschinenkomponenten als virtuelle dreidimensionale Körper modelliert und deren Kinematik wird in einem dreidimensionalen Raum hinsichtlich des gegenseitigen Abstandes zueinander überwacht. Bei Unterschreiten einer gewissen Mindestabstandes kann die Kollisionsüberwachung eine potenzielle Kollision erkennen und den Bediener informieren. Denkbar sind unterschiedliche Grenzwerte für bestimmte Konstellationen bzw. Maschinenkomponenten.

Gemäß einer bevorzugten Ausgestaltung des Verfahrens erfolgt die virtuelle dreidimensionale Modellierung auf Grundlage einer Hüllkurvenfunktion, indem eine Hüllkurve um die entsprechende Maschinenkomponente gelegt wird. Der Verzahnbetrieb wird folglich in einem virtuellen dreidimensionalen Modell mit verschiedenen dreidimensionalen Hüllkörpern überwacht.

Gemäß einer bevorzugten Ausgestaltung des Verfahrens wird die Auflösung der Hüllkurven bzw. Hüllkörper, d.h. die Präzision der Modellierung, in Abhängigkeit der Distanz zu wenigstens einer anderen Maschinenkomponente bestimmt. Bei ausreichend großer Distanz ist die Kollisionswahrscheinlichkeit geringer und eine geringere Auflösung für die Modellierung ausreichend. Durch die geringere Auflösung ist ein ressourcenschonenderer Betrieb der Maschinensteuerung möglich. Mit abnehmender Distanz ist eine hohe Auflösung aufgrund der zunehmenden Kollisionswahrscheinlichkeit notwendig.

Bei einer weiteren bevorzugten Ausgestaltung des Verfahrens, stoppt die Maschinensteuerung der Verzahnmaschine die Verzahnbearbeitung sofern die Kollisionsüberwachung eine Kollision erkennt. Dies gilt sowohl für die Erkennung einer möglichen Kollisionsgefahr als auch unmittelbar vor dem Eintritt einer Kollision. Nach dem Erkennen einer Kollisionsgefahr bzw. Kollision kann die Maschinensteuerung eine Warnmeldung auf einer geeigneten Anzeigeeinheit ausgeben. Besonders vorteilhaft ist hier eine visuelle Darstellung der Kollisionssituation.

Vorzugsweise ist die Kollisionsüberwachung alternativ offline auszuführen. Die offline ausgeführte Kollisionsüberwachung ist insbesondere dann sinnvoll, wenn nach dem Rüstvorgang der Verzahnmaschine und unmittelbar vor dem Beginn des Verzahnprozesses mögliche potentielle Kollisionsstellen und Gefahren erkannt und von vornherein vermieden werden sollen. In diesem Zusammenhang ist es denkbar, dass nach vollständiger Konfiguration der Verzahnmaschine eine virtuelle Simulation des beabsichtigten Verzahnprozesses innerhalb der Maschinensteuerung erfolgt und folglich potentielle Kollisionsstellen erkannt werden können. Damit können noch vor Beginn des Verzahnprozesses geeignete Gegenmaßnahmen getroffen werden, um die Gefahr weitestgehend reduzieren zu können.

Die Erfindung betrifft des Weiteren eine Verzahnmaschine mit einer Maschinensteuerung zur Durchführung des erfindungsgemäßen Verfahrens bzw. zur Durchführung einer vorteilhaften Ausgestaltung des erfindungsgemäßen Verfahrens. Die erfindungsgemäße Verzahnmaschine weist offensichtlich dieselben Vorteile und Eigenschaften wie das erfindungsgemäße Verfahren auf, weshalb an dieser Stelle eine wiederholende Beschreibung als nicht notwendig erachtet wird.

Neben der erfindungsgemäßen Verzahnmaschine betrifft die Erfindung zudem eine auf einem Datenträger gespeicherte Steuersoftware zur Durchführung des erfindungsgemäßen Verfahrens bzw. einer vorteilhaften Ausgestaltung des Verfahrens. Die erfindungsgemäße Steuersoftware lässt sich auf eine entsprechende Maschinensteuerung einer Verzahnmaschine laden, und dient zur Ausführung des erfindungsgemäßen Verfahrens während der Verzahnungsbearbeitung.

Weitere Vorteile und Eigenschaften der Erfindung sollen im Folgenden anhand eines in den Zeichnungen dargestellten Ausführungsbeispiels näher erläutert werden.

Es zeigen:
- Figur 1:: eine Darstellung einer bekannten CNC-Verzahnmaschine,
- Figur 2:: eine perspektivische Teilansicht des Maschineninnenraums einer Verzahnmaschine ausgehend von der Beladetür,
- Figur 3:: eine perspektivische Detailansicht auf dem Bearbeitungskopf von der Beladeseite,
- Figur 4:: eine Seitenansicht in den Maschinenraum der Verzahnmaschine mit zugestelltem Ringlader und
- Figur 5:: eine perspektivische Seitenansicht der Abbildung aus Figur 4 von der Gegenseite.

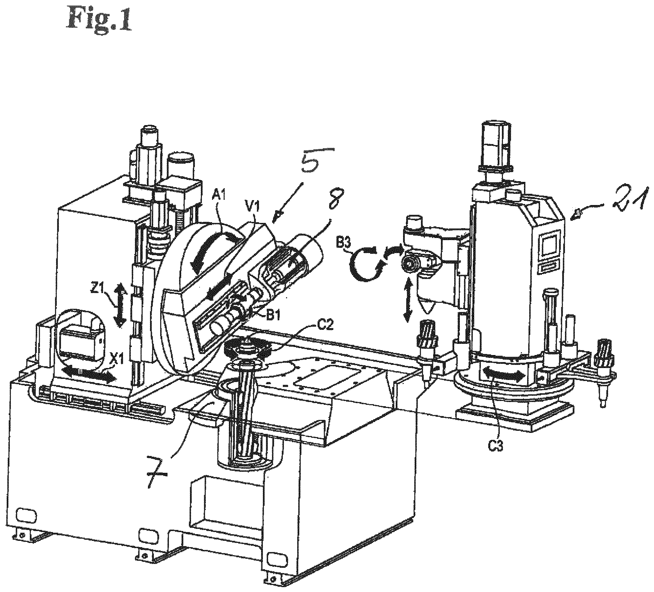

Figur 1 zeigt eine Darstellung einer bekannten CNC-Verzahnmaschine zur Herstellung eines verzahnten Werkstückes. Die hier dargestellte CNC-Verzahnmaschine ist bekannten Aufbaus und wird daher im Einzelnen nicht nochmals erläutert. In der schematischen perspektivischen Darstellung der CNC-gesteuerten Fräs- oder Schleifmaschine für Wälz- oder Profilbearbeitung sind die unterschiedlichen Bewegungsrichtungen eingezeichnet. Der Darstellung sind die fünf Standardachsen der CNC-Maschine zu entnehmen, die sich in die drei Linearachsen X1, Z1, V1 sowie die drei Rotationsachsen A1, B1 und C2 einteilen lassen. Die Rotationsachse A1 dient zum Einschwenken des nicht dargestellten Werkzeugs, die Rotationsachse B1 ist für die Drehbewegung des verwendeten Werkzeugs zuständig und die Rotationsachse C2 bezeichnet die Drehbewegung des hier ebenfalls nicht dargestellten zu bearbeitenden Werkstücks auf dem Werkstücktisch 7. Die drei Linearachsen X1, Z1 und V1 dienen zur Radialbewegung des Werkzeugs (X1), zur Vorschubbewegung des Werkzeugs (Z1) sowie zur Tangentialbewegung des Werkzeugs (V1).

Zudem ist in der Darstellung ein Gegenständer vorgesehen, der unterschiedliche Funktionen, beispielsweise zur Integration eines Gegenhalterarms, eines Ringladers, etc. übernehmen kann. Die Drehachse C3 eignet sich beispielsweise zur Ausführung der Drehbewegung eines Ringladers.

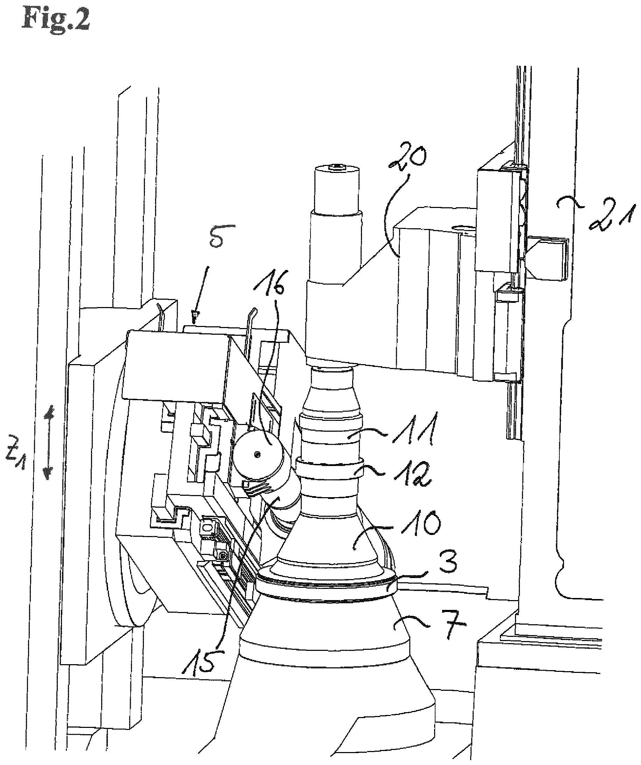

Figur 2 zeigt eine perspektivische Ansicht des Maschinenraums während der Fräsbearbeitung eines Werkstücks 12. Der Darstellung ist der Fräskopf 5 zu entnehmen, der an dem Werkzeugständerschlitten schwenkbar um die Achse A1 gelagert ist. Zudem ist der Fräskopf 5 für die Werkzeugvorschubbewegung in Z1-Achsenrichtung vertikal und zur Radialbewegung des Werkzeugs 15 horizontal in X1-Richtung linear zustellbar.

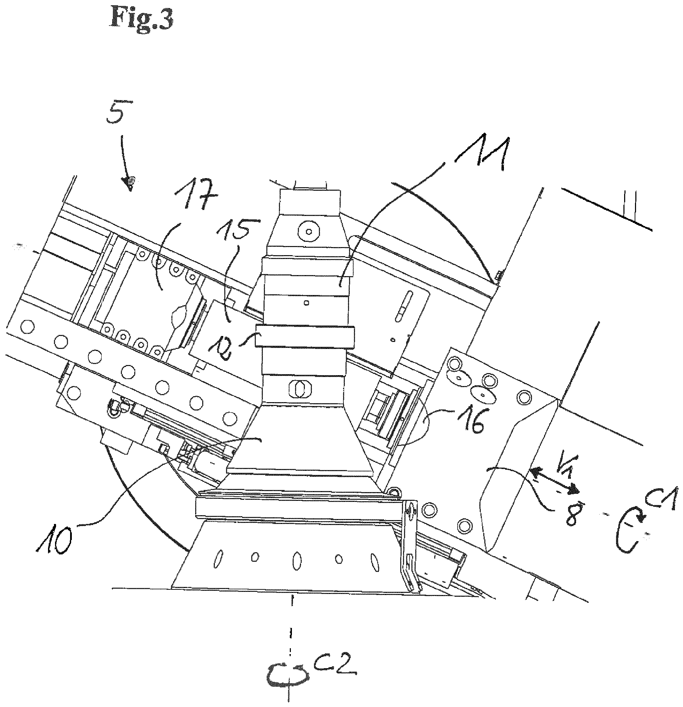

Figur 3 zeigt den Innenraum der Verzahnmaschine von der Beladeseite, wobei dieser ohne Automation und Gegenständer dargestellt ist. Hierbei ist ersichtlich, dass der Fräskopf 5 um einen gewissen Schwenkwinkel um die Achse A1 verschwenkt ist, um eine bestimmte Schrägungsrichtung des zu erstellenden Werkstückes zu erzeugen.

Aufgrund des enormen Umfangs des Bearbeitungskopfes ist insbesondere die Kollisionsgefahr zwischen Fräserkopf 5 und Maschinenbett 7 bzw. Maschinentisch 3 zu erkennen. Der Fräskopf 5 umfasst das Hauptlager 17 mit dem Antriebsaggregat 8 sowie ein Gegenlager 16 (Figur 3). Im dazwischen liegenden Bearbeitungskopfbett ist der Arbeitsdorn eingespannt, auf den der Fräser 15 drehbar um die B1-Achse aufgedornt ist.

Der Maschinentisch 7 trägt die Tischplatte 3 zur Aufnahme einer Vorrichtung zum Aufspannen des Werkstückes 12. Die Vorrichtung unterteilt sich in ein Vorrichtungsunterteil 10 sowie ein Vorrichtungsoberteil 11, die das Werkstück 12 von unten und oben greifen und einspannen. Die gesamte Vorrichtung 10, 11 ist mit dem Werkstück um die Werkstückrotationsachse C2 drehbar. Das Vorrichtungsoberteil 11 wird von dem Gegenhalterarm 20 aufgenommen, der wiederum am Gegenständer 21 in Z4-Richtung linear beweglich gelagert ist.

In dem dargestellten Verzahnbearbeitungsszenario besteht eine erhöhte Wahrscheinlichkeit einer Kollision zwischen dem Haupt- oder Gegenlager 17, 16 des Fräsers 15 mit der Vorrichtung 10, 11, falls der Fräskopf 5 um die Achse A1 geschwenkt wird oder wenn sich der Fräskopf 5 in einer extremen in V1-Richtung geshifteten äußeren Position befindet, so dass sich das Gegenlager 16 oder das Hauptlager 17 auf Höhe der Werkstückdrehachse C2 liegt, und der Fräskopf 5 in dieser Lage in X1- oder Z1-Richtung zum Werkstück 12 zugestellt wird.

Eine erhebliche Kollisionsgefahr zwischen Fräskopf 5 und Maschinenbett 7 bzw. Maschinentisch 3 liegt auch dann vor, wenn der Fräskopf 5 je nach Schrägungsrichtung des zu erstellenden Zahnrades 12 links oder rechts schräg eingeschwenkt ist. Diese Position ist abhängig vom Schrägungswinkel der Verzahnung des Werkstücks 12 und der Steigungsrichtung des Werkzeugs 15. Eine Rolle spielt in diesem Fall auch die Zustellung in X1-Richtung und in Z1-Richtung. Je kleiner der Werkstückdurchmesser des Werkstückes 12 ist, umso größer ist die Gefahr von möglichen Kollisionen zwischen Fräskopf 5 und Maschinenbett 7 bzw. Maschinentisch 3.

Für die Ausführung der Kollisionsüberwachung werden die einzelnen beweglichen Komponenten der Verzahnmaschine, d.h. der Bearbeitungskopf 5 inklusive dem Werkzeug 15 sowie den Lagerstellen 16, 17 und dem Antrieb 8, der Maschinentisch 7, die Tischplatte 3, die Vorrichtung 10, 11, der Gegenhalterarm 20 und Gegenhaltereinsatz 22 sowie das Werkstück 12 als dreidimensionale Objekte modelliert und für die virtuelle Kollisionsüberwachung in einem dreidimensionalen Raum berücksichtigt. Dazu werden die genannten Komponenten durch Hüllkörper modelliert, die um den Umfang der entsprechenden Komponenten gelegt werden. Die Auflösung bzw. die Präzision, mit dem die einzelnen Teilkomponenten modelliert werden, hängt von dem Abstand zwischen den jeweiligen Komponenten ab, die zu einer möglichen Kollision führen können. Ist der Bearbeitungskopf 5 beispielsweise in einem bestimmten Abstand vom Maschinentisch bzw. der Tischplatte entfernt, kann die Kollisionsüberwachung mit einer geringeren Genauigkeit arbeiten, wobei eine vereinfachte Hüllkurvenfunktion verwendete wird, die die strukturellen Feinheiten des Bearbeitungskopfes bzw. der anderen Teilkomponenten vernachlässigt. Je näher sich der Bearbeitungskopf 5 an die Tischplatte 3 bzw. den Maschinentisch 7 annähert, desto genauer muss die Modellierung der einzelnen Komponenten sein, um gegebenenfalls Kollisionen erkennen zu können.

Zudem muss auch unterschieden werden, welche Teile bestimmter Komponenten miteinander kollidieren dürfen bzw. nicht kollidieren dürfen. Dies betrifft insbesondere das Werkzeug 15, das selbstverständlich mit dem Werkstück 12 in Eingriff steht und nicht zu einer Kollisionserkennung führen darf. Bei der Modellierung des Bearbeitungskopfes 5 muss daher zwischen Werkzeugteil 15 und den Lagern 16, 17 bzw. Antrieb 8 des Bearbeitungskopfes unterschieden werden. Jedoch muss eine Kollision des Werkzeuges 15 mit einem anderen Maschinenteil abweichend von dem Werkstück 12 erkannt und unterbunden werden.

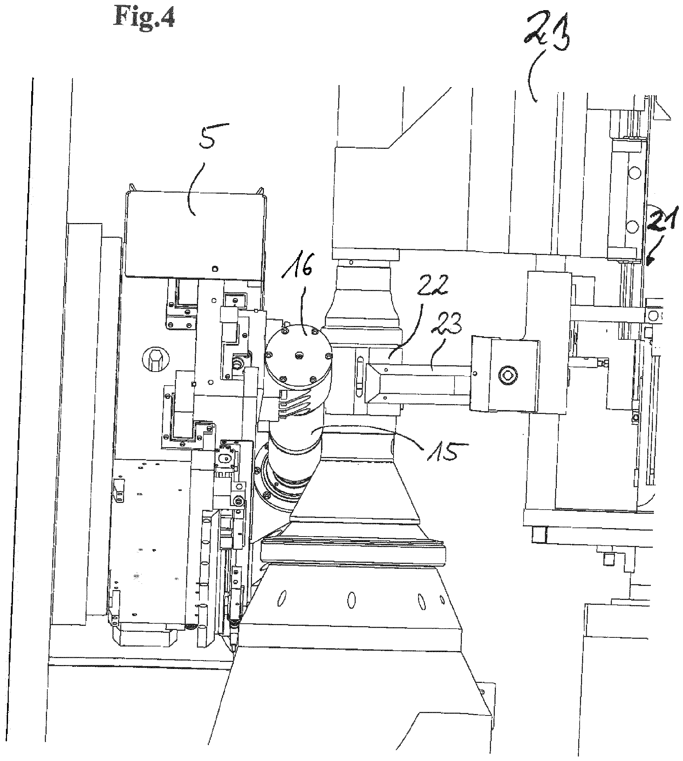

Figur 4 zeigt eine Ansicht des Maschinenraums mit dem Gegenständer 21, der einen sogenannten Ringlader trägt. Der Ringlader weist hier einen Greiferarm 23 auf, der über einen passenden Greifereinsatz 22 das zu bearbeitende Werkstück 12 greifen und somit einen Werkstückwechsel während des Verzahnungsprozesses automatisch durchführen kann. Hierbei besteht ebenfalls ein erhöhtes Kollisionspotential zwischen den Haupt- und Gegenlager 17, 16 des Bearbeitungskopfes 5 mit den Greifeinsätzen 22 des Greiferarms 23, wenn der Fräskopf 5 in V1-Richtung geshiftetwird. Folglich werden der Greifereinsatz 22 sowie der Greiferarm 23 des Ringladers als virtuelle 3D-Objekte modelliert und für die Kollisionsüberwachung berücksichtigt.

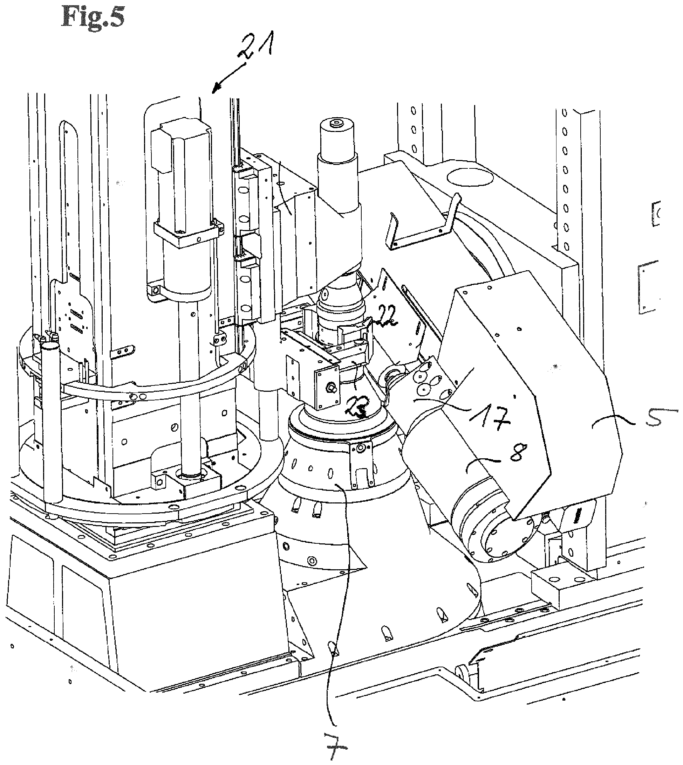

Figur 5 zeigt den Maschinenraum von der Gegenseite, woraus ersichtlich wird, dass die Lager 16, 17 des Bearbeitungskopfes 5 bei einer Shift-Bewegung mit dem Greifereinsatz 22 kollidieren können.

Wie eingangs bereits erläutert wurde müssen für den programmgesteuerten Verzahnprozess eine Reihe von Maschinenparametern, die die einzelne rüstbaren Maschinenkomponenten betreffen, in die Maschinensteuerung manuell eingegeben werden. Um die Fehleranfälligkeit dieser Eingaben zu reduzieren weist die Verzahnmaschine für die notwendige Maschinenkonfiguration vor Beginn des Verzahnprozesses ein berührungsempfindliches Anzeigedisplay auf. Die Maschinensteuerung ermöglicht hier eine virtuelle dreidimensionale Darstellung gewisser Maschinenkomponenten und/oder Bearbeitungsvorgänge der Verzahnmaschine. Dadurch bietet die Maschine dem Anwender die Möglichkeit, ein tatsächlich gerüstete Maschinenteil, d.h. Werkzeug 15, Vorrichtung 10, 11, Werkstück 12, Ringlader inklusive Greiferarm 21, 23, Greifereinsatz 22 etc. durch eine graphische Modellierung auf dem Anzeigeelement nachzustellen. Die notwendigen Parameter für die Maschinensteuerung werden anschließend direkt aus der erstellten Modellierung abgeleitet und für die Verzahnbearbeitung der Maschinensteuerung bereitgestellt. Die notwendige Steuerungskonfiguration erfolgt quasi nicht mehr durch Eingabe nackter Zahlen, sondern visuell auf Grundlage einer graphischen Modellierung. Die für die visuelle Darstellung benötigten Rohdaten der Maschinenkomponenten können sogleich für die Kollisionsüberwachung genutzt werden.

Die graphische Modellierung und Darstellung auf dem Anzeigeelement bietet dem Anwender die Möglichkeit zur visuellen Kontrolle seiner Eingabe. Der Anwender kann folglich das erstellte graphische Modell auf dem Anzeigeelement mit dem tatsächlich gerüsteten Maschinenteil abgleichen, offensichtliche Fehler fallen ins Auge und können von vornherein vermieden werden. Zusätzliche Berechnungsschritte entfallen vollständig. Dieses Verfahren reduziert die Wahrscheinlichkeit manueller Fehleingaben erheblich.

Durch Interaktion mit einem Bedienfeld bzw. dem Anzeigeelement kann der Anwender die graphische Modellierung präzise an das tatsächlich eingesetzte Maschinenteil anpassen. Idealerweise wird die graphische Darstellung des wenigstens einen Maschinenteils durch ein Rendering-Verfahren der Maschinensteuerung berechnet. Die dazu notwendigen Rohdaten bzw. Szene-Informationen sind in einer Datenbank der Verzahnmaschine hinterlegt.

In einer bevorzugten Ausgestaltung des Verfahrens erfolgt der Rendering-Prozess in Echtzeit und die zugrundeliegende Szene kann vom Bediener interaktiv verändert werden. Beispielsweise kann der Bediener durch Benutzereingabe den Sichtwinkel sowie den Zoom der Darstellung interaktiv verändern, die Berechnung des computerbasierten Modells erfolgt in Echtzeit und wird sofort auf dem Anzeigeelement visualisiert.

Sinnvollerweise ist das Anzeigeelement touchfähig, insbesondere multitouchfähig, so dass der Bediener durch Berührung des Anzeigeelementes die Szene des graphisch modellierten Maschinenteils verändern kann. Insbesondere wird ein multitouchfähiges Anzeigeelement verwendet, so dass sich die Szene interaktiv durch diverse Multifingergesten verändern lässt.

Für die graphische Modellierung wenigstens eines Maschinenteils kann der Nutzer auf eine Datenbank der Verzahnmaschine zurückgreifen. Hier kann ein Maschinenteil, beispielsweise die Vorrichtung 10, 11 oder der Arbeitsdorn aus einer Reihe von diversen Einzelkomponenten zusammengesetzt werden. Dem Nutzer bietet sich eine Auswahlmöglichkeit, um den gerüsteten Arbeitsdorn virtuell zusammenzusetzen. Die Datenbank bietet ihm dazu unterschiedliche Dornarten, die mit passenden Werkzeugen sowie Abstandshülsen etc. bestückt werden können. Idealerweise kann der Anwender jeden tatsächlichen Arbeitsdorn maßstabsgetreu unter Verwendung der Datenbank graphisch modellieren. Die steuerungsrelevanten Parameter für die Maschinensteuerung werden automatisch aus der graphischen Modellierung abgeleitet und der Maschinensteuerung zugeführt. Eine manuelle Konfiguration der Verzahnmaschine bezüglich des verwendeten Maschinenteils ist nicht mehr notwendig.

Neben der rein visuellen Plausibilitätskontrolle des Anwenders erfolgt im Hintergrund eine virtuelle Plausibilitätskontrolle der graphischen Modellierung durch die Maschinensteuerung. Insbesondere wird hier überprüft und überwacht, ob die Eingaben, d. h. die graphische Modellierung, des Anwenders sinnvoll ist und nicht zu einem Fehlverhalten bzw. zu einer Kollision während der nachfolgenden Verzahnbearbeitung führt. Beispielsweise erfolgt die virtuelle Plausibilitätskontrolle unter Berücksichtigung eines geplanten Bearbeitungsprogramms zur Verzahnung und/oder unter Berücksichtigung der zusammengesetzten Komponenten eines Maschinenteils und/oder unter Berücksichtigung weiterer rüstbarer Maschinenteile. Vorstellbar ist eine Überwachung dahingehend, ob ein Arbeitsdorn aus einer sinnvollen Auswahl an Teilkomponenten zusammengesetzt ist. Auch wird überwacht, ob für die geplante Bearbeitung eine notwendige Vorrichtung zur Werkstückaufspannung gerüstet bzw. konfiguriert wurde.

Die Maschinensteuerung kann das Ergebnis der Plausibilitätskontrolle anzeigen und gegebenenfalls Warnmeldungen ausgeben und im Notfall einen Maschinenstopp erzwingen.

Denkbar ist es auch, dass die geometrische Modellierung des Maschinenteils bzw. wenigstens einer einzelnen Komponente des Maschinenteils durch Benutzereingabe modifizierbar ist. Der Anwender kann folglich nicht nur einzelne Maschinenteile bzw. Maschinenteilkomponenten aus der Datenbank auswählen, sondern diese individuell per Benutzereingabe in Echtzeit modifizieren, insbesondere hinsichtlich ihrer geometrischen Abmessung bzw. Positionierung, Lage oder Ausrichtung zu anderen Maschinenteilkomponenten etc.. Auch können etwaige Eigenschaften des Maschinenteils bzw. der Maschinenteilkomponente geändert und angepasst werden. Dies trifft insbesondere bei der Verwendung von unterschiedlichen Werkzeugen zu, die durch Benutzereingabe hinsichtlich ihrer Gangzahl, Zahnzahl, etc. an die tatsächlich verwendeten Maschinenteilkomponenten anpassbar sind.

Die Datenbank kann über eine entsprechende Schnittstelle erweitert werden, insbesondere durch ergänzende Einträge zu Maschinenteilen bzw. Maschinenteilkomponenten. Dies trifft gleichermaßen für die notwendigen Rohdaten für den Rendering-Prozess zu.

## Patentansprüche

1. Verfahren zur Steuerung einer Verzahnmaschine mit wenigstens einem Werkzeug zur Verzahnung eines in einer Werkstückaufnahme eingespannten Werkstückes, wobei die Maschinensteuerung während der Verzahnbearbeitung eine dreidimensionale Kollisionsüberwachung ausführt,
**dadurch gekennzeichnet,**
**dass** die Kollisionsüberwachung während eines CNC-gesteuerten Verzahnprozesses und eines Werkstückwechsels und/oder Werkzeugwechsels aktiv ist und eine vorausschauende Kollisionsüberwachung erfolgt, indem zukünftige Bewegungsparameter der Maschinenkomponenten auf Kollision überwacht werden, wobei zukünftige Bewegungsparameter aus dem Programmcode der Maschinensteuerung abgeleitet werden.

2. Verfahren nach Anspruch 1, **dadurch gekennzeichnet, dass** definierte Maschinenkomponentenals virtuelle dreidimensionale Körper für die Kollisionsüberwachung modelliert werden und die Bewegungsabläufe der virtuellen dreidimensionalen Körper vorzugsweise hinsichtlich ihrer Distanz zueinander überwacht werden.

3. Verfahren nach Anspruch 2, **dadurch gekennzeichnet, dass** zur virtuellen dreidimensionalen Modellierung der definierten Maschinenkomponenten eine Hüllkurve um die Maschinenkomponente gelegt wird.

4. Verfahren nach einem der Ansprüche 2 oder 3, **dadurch gekennzeichnet, dass** die Auflösung der dreidimensionalen Modellierung einer Maschinenkomponente in Abhängigkeit der Distanz zu wenigstens einem anderen Maschinenteil bestimmt wird.

5. Verfahren nach einem der vorhergehenden Ansprüche, **dadurch gekennzeichnet, dass** es sich bei den modellierten Maschinenkomponenten um ein oder mehrere Werkzeuge, eine Arbeitsspindel inklusive aufgedornter Werkzeuge, einen Bearbeitungskopf, Vorrichtung zum Aufspannen eines Werkstückes, ein Werkstück, einen Maschinentisch, ein Maschinenbett, einen Ringlader, einen Greiferarm, einen Greifereinsatz, etc. handelt.

6. Verfahren nach einem der vorhergehenden Ansprüche, **dadurch gekennzeichnet, dass** die Verzahnbearbeitung gestoppt wird, falls eine Kollision vorliegt und/oder eine Kollisionsgefahr erkannt wird, wobei gegebenenfalls eine Warnmeldung mit Kollisionsbeschreibung ausgegeben wird.

7. Verfahren nach Anspruch 6, **dadurch gekennzeichnet, dass** die Warnmeldung eine visuelle grafische Darstellung des Kollisionsfalls auf einem Anzeigeelement ist.

8. Verfahren nach einem der vorhergehenden Ansprüche, **dadurch gekennzeichnet, dass** die Kollisionsüberwachung offline ausgeführt werden kann, um nach dem Maschinenrüsten und vor der Verzahnbearbeitung mögliche potentielle Kollisionen zu erkennen.

9. Verzahnmaschine mit einer Maschinensteuerung zur Durchführung des erfindungsgemäßen Verfahrens nach einem der vorhergehenden Ansprüche.

10. Auf einem Datenträger gespeicherte Steuersoftware zur Durchführung des Verfahrens nach einem der Ansprüche 1 bis 8.

## Claims

1. Method of controlling a gear cutting machine having at least one tool for cutting gears into a workpiece clamped in a workpiece mount, wherein the machine control carries out a three-dimensional collision monitoring during the gear cutting machining process,
**characterized in that**
the collision monitoring is active during a CNC controlled gear cutting process and during a workpiece change and/or during a tool change and a predictive collision monitoring takes place **in that** future movement parameters of the machine components are monitored for collisions, wherein future movement parameters are derived from the program code of the machine control.

2. Method in accordance with claim 1, **characterized in that** defined machine components, in particular adjustable machine components, are modeled as virtual three-dimensional bodies for the collision monitoring and the movement routines of the virtual three-dimensional bodies are preferably monitored with respect to their distances from one another.

3. Method in accordance with claim 2, **characterized in that** an envelope is laid about the machine component for the virtual three-dimensional modeling of the defined machine components.

4. Method in accordance with one of the claims 2 or 3, **characterized in that** the resolution of the three-dimensional modeling of a machine component is determined in dependence on the distance from at least one further machine part.

5. Method in accordance with one of the preceding claims, **characterized in that** the modeled machine components are one or more tools, a working spindle, including tools placed onto a mandrel, a machining head, an apparatus for clamping a workpiece, a workpiece, a machine table, a machine bed, a ring loader, a gripper arm, a gripper insert, etc.

6. Method in accordance with one of the preceding claims, **characterized in that** the gear cutting machining process is stopped if a collision is present and/or a risk of collision is recognized, wherein optionally an alarm with a collision description is output.

7. Method in accordance with claim 6, **characterized in that** the alarm is a visual graphical representation of the collision case on a display element.

8. Method in accordance with one of the preceding claims, **characterized in that** the collision monitoring can be carried out offline to recognize possible potential collisions after the machine adjustment and before the gear cutting machining process.

9. Gear cutting machine having a machine control for carrying out the method in accordance with the invention in accordance with one of the preceding claims.

10. Control software stored on a data carrier for carrying out the method in accordance with one of the claims 1 to 8.

## Revendications

1. Procédé de commande d'une machine à tailler les engrenages avec au moins un outil pour tailler les engrenages d'une pièce serrée dans un logement de pièce, la commande de machine exécutant une surveillance des collisions tridimensionnelle pendant l'usinage de taille des engrenages,
**caractérisé en ce que**
la surveillance des collisions est active pendant un processus de taille des engrenages commandé par CNC et un changement de pièce et/ou un changement d'outil et une surveillance des collisions prévisionnelle est effectuée en surveillant les paramètres de déplacement futurs des composants de machine pour détecter une collision, les paramètres de déplacement futurs étant déduits du code de programme de la commande de machine.

2. Procédé selon la revendication 1, **caractérisé en ce que** des composants de machine définis sont modélisés en tant que corps tridimensionnels virtuels pour la surveillance des collisions et les séquences de déplacement des corps tridimensionnels virtuels sont surveillées de préférence en ce qui concerne leur distance mutuelle.

3. Procédé selon la revendication 2, **caractérisé en ce que**, pour la modélisation tridimensionnelle virtuelle des composants de machine définis, une courbe enveloppante est placée autour du composant de machine.

4. Procédé selon l'une quelconque des revendications 2 ou 3, **caractérisé en ce que** la résolution de la modélisation tridimensionnelle d'un composant de machine est déterminée en fonction de la distance par rapport à au moins un autre composant de machine.

5. Procédé selon l'une quelconque des revendications précédentes, **caractérisé en ce que** les composants de machine modélisés consistent en un ou plusieurs outils, une broche de travail, y compris des outils mandrinés, une tête d'usinage, un dispositif de serrage d'une pièce, une pièce, une table de machine, un banc de machine, un chargeur annulaire, un bras de préhension, un insert de préhension, etc.

6. Procédé selon l'une quelconque des revendications précédentes, **caractérisé en ce que** l'usinage de taille des engrenages est arrêté s'il y a une collision et/ou si un risque de collision est détecté, un message d'avertissement avec description de la collision étant éventuellement émis.

7. Procédé selon la revendication 6, **caractérisé en ce que** le message d'avertissement est une représentation graphique visuelle du cas de collision sur un élément d'affichage.

8. Procédé selon l'une quelconque des revendications précédentes, **caractérisé en ce que** la surveillance des collisions peut être exécutée hors ligne afin de détecter d'éventuelles collisions potentielles après la préparation de la machine et avant l'usinage de taille des engrenages.

9. Machine à tailler les engrenages avec une commande de machine pour la réalisation du procédé selon l'invention selon l'une quelconque des revendications précédentes.

10. Logiciel de commande stocké sur un support de données pour la réalisation du procédé selon l'une quelconque des revendications 1 à 8.
